(19) Europäisches Patentamt
European Patent Office
Office européen des brevets

(11) **EP 2 437 096 B1**

(12) **EUROPÄISCHE PATENTSCHRIFT**

(45) Veröffentlichungstag und Bekanntmachung des Hinweises auf die Patenterteilung:
**22.11.2017   Patentblatt 2017/47**

(51) Int Cl.:
*G02B 21/00* *(2006.01)*    *G02B 26/06* *(2006.01)*

(21) Anmeldenummer: **11007920.9**

(22) Anmeldetag: **29.09.2011**

(54) **Mikroskop und Mikroskopierverfahren**

Microscope and microscopy method

Microscope et procédé de microscopie

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2010   DE 102010047352**
**08.03.2011   DE 102011013613**

(43) Veröffentlichungstag der Anmeldung:
**04.04.2012   Patentblatt 2012/14**

(73) Patentinhaber: **Carl Zeiss Microscopy GmbH**
**07745 Jena (DE)**

(72) Erfinder:
• **Anhut, Tiemo**
**07749 Jena (DE)**
• **Kalkbrenner, Thomas**
**07745 Jena (DE)**
• **Schwedt, Daniel**
**99423 Weimar (DE)**

(74) Vertreter: **Hampe, Holger**
**Carl Zeiss AG**
**Konzernfunktion Recht und Patente**
**Patentabteilung Jena**
**07740 Jena (DE)**

(56) Entgegenhaltungen:
**WO-A1-2009/008838     US-A1- 2002 154 317**

• **N. G. CHEN ET AL: "Real-time focal modulation microscopy", PROCEEDINGS OF SPIE, Bd. 7570, 25. Januar 2010 (2010-01-25), Seiten 75700Q-75700Q-6, XP055000327, ISSN: 0277-786X, DOI: 10.1117/12.841511**
• **NANGUANG CHEN ET AL: "Focal modulation microscopy", OPTICS EXPRESS, Bd. 16, Nr. 23, 10. November 2008 (2008-11-10), Seiten 18764-9, XP055000204, ISSN: 1094-4087, DOI: 10.1364/OE.16.018764**

**Beschreibung**

Stand der Technik

Referenzen

[1] Chen et al., Opt. Express 16, 18764 (2008)
[2] Wong et al., Appl. Opt. 48, 3237 (2009)
[3] TOF Kamera mit Lock-In pixeln: http://www.mesa-imaging.ch/
[4] Gated-Intensifier-Kamera: z.B. tautec pico star: http://www.tautec.com/4709/4736.html
[5] Sueda et al., Opt. Express 12, 3548 (2004)
[6] WO2009/008838
[7] EP500717 B2 Zweiphotonenmikroskopie
[8] A. Leray and J. Mertz, Opt. Express 14, 10565 (2006)

In verschiedenen Bereichen der Optik wird eine schnelle Umschaltung zwischen verschiedenen räumlichen Lichtverteilungen benötigt. Zum Beispiel kann man eine solche Möglichkeit in der Laserrastermikroskopie nutzen, um sehr schnell zwischen verschiedenen Fokusfeldern schalten zu können. Dies ist insbesondere dann wichtig, wenn man nur das Licht im Fokus eines Objektivs beeinflussen möchte. Hier wurde kürzlich eine Methode demonstriert, mit welcher eine dreidimensionale Abbildung von optisch dicken Proben möglich wird, wobei das Hintergrundlicht diskriminiert wird [1,2,6].

Die Grundlage ist hierbei, dass eine Eigenschaft nur die Fluoreszenz, welche im Fokus generiert wird, zeitlich beeinflusst, wobei die Strahlung außerhalb des Fokus nicht moduliert werden soll. Bislang beruht diese Methode auf dem schnellen Schalten der optischen Phase in der Pupille eines Objektivs. Gezeigt wurde bislang, dass man die Phase in zwei Halbpupillen schaltet.

Aus US2002154317A1 ist ein konfokales Mikroskop mit Demodulation bekannt.

Lösung

Die Erfindung ist in den unabhängigen Ansprüchen angegeben. Vorteilhafte Ausgestaltungen sind in den abhängigen Ansprüchen angegeben.

Ähnlich der oben geschilderten Halbpupillenschaltung kann vorteilhaft auch die Schaltung zwischen den optischen Phasen anderer Teilstrahlen genutzt werden. Zudem ist es vorteilhaft möglich, nicht nur die Phasen, sondern generell die Feldmodenschaltung zu nutzen, um eine zeitliche Modulation der Emission aus dem Fokalvolumen zu generieren, wobei die Strahlung außerhalb des Fokalvolumens zeitlich nicht moduliert wird. Es sollen hier auch schnelle Modenschalter für diesen Zweck diskutiert werden.
Neben der Phasenschaltung wird zudem die Schaltung der Polarisation als weitere Möglichkeit vorgeschlagen, um schnell zwischen zwei verschiedenen Feldmoden des

Anregungsspots zu wechseln, wodurch die aus dem Fokalvolumen kommende Strahlung moduliert wird. Es ist erkannt worden, dass man hierbei einen ähnlichen Effekt erzielen kann, wie mit dem Schalten der Phase. Die Auswirkungen des Schaltens beeinflussen insbesondere die Anregung von Fluoreszenz im Fokus.

Die infrage kommenden Lösungen sollen zu einer Modulation im Bereich mehrerer MHz führen. Damit sind sie grundsätzlich für einen vorteilhaften Einsatz in Laser-Scanning Mikroskopen (LSM) zur Erhöhung der Eindringtiefe ohne Einbußen in der Scangeschwindigkeit geeignet. Eine weitere Erhöhung der Geschwindigkeit ergibt sich durch eine Parallelisierung mittels Multispotmikroskopie. Allerdings ist eine langsamere Modulation immer auch möglich und kann entsprechend eingestellt werden.

Wegen der vorteilhaften hohen Modulationsfrequenzen kommen im Wesentlichen schnell schaltende optoelektronische Elemente wie zum Beispiel AOMs und EOMs infrage. Mit den Lösungen soll eine Eigenschaft geschaltet werden, die sich am Ende im Wesentlichen auf das Feld im Fokus auswirkt und in dessen Resultat das Fokusfeld moduliert wird, während die wesentlichen außerfokalen Anteile nicht signifikant moduliert werden.
Die Erfindung wird durch die Merkmale der unabhängigen Patentansprüche charakterisiert.
Bevorzugte Weiterbildungen sind Gegenstand der abhängigen Ansprüche.

Es folgt nun eine schematische Beschreibung verschiedener vorteilhafter Ausführungen zur Erfindung:

Ausführung 1

In einer ersten Ausführung wird davon ausgegangen, dass die Phasen an einem passiven Element erzeugt werden, welches einen polarisationsabhängigen Phasenhub in verschiedenen räumlichen Bereichen, vorzugsweise in einer Objektivpupille, einführt. Um eine schnelle zeitliche Modulation zu erzeugen, wird die Polarisation z.B. mittels eines EOM oder eines weiteren geeigneten Elementes wie z.B. nematischer Kristalle, welcher aber langsamer reagieren, oder Aufbauten, die über eine Wegaufteilung eine unterschiedliche Polarisation erzeugen und dieser Weg z.B. über einen AOM/AOTF schnell wechselt, zeitlich manipuliert.

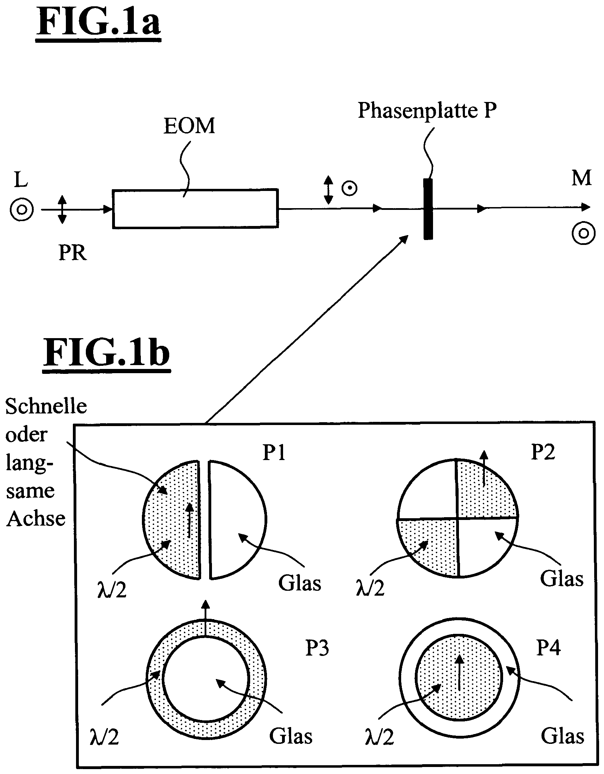

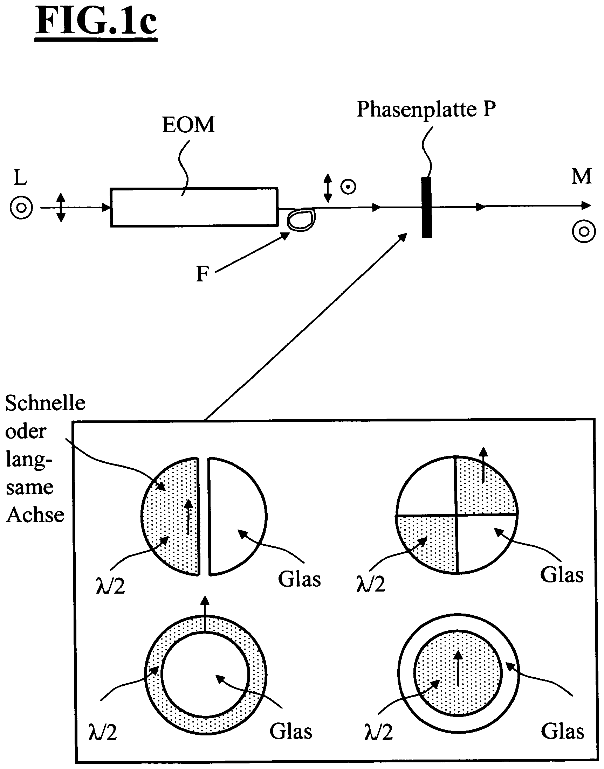

Durch das Umschalten bzw. Drehen der Polarisation in Fig.1 wird jeweils ein Teil des die Phasenplatten durchsetzenden Strahls in seiner optischen Phase beeinflusst, während die Anteile des Strahls, die durch den polarisationsunabhängigen Anteil der Platte gehen, keinen Phasenhub erfahren. Damit ist es möglich, durch eine Schaltung des Polarisationszustandes eine Umschaltung der Phasen zu erzielen. Die in Fig.1 gezeigten Phasenplatten sind nur beispielhaft. Prinzipiell sind hier verschiedene Geometrien denkbar. Durch die Modulation beispielsweise eines EOM kann der Polarisationszustand beispielsweise entweder sinusoidal oder mit einem Rechteckprofil oder einer anderen vorteilhaften Wellenform variiert werden. Hierdurch wird der Übergang im Fokus des Mikroskopes zeitlich verschieden beeinflusst.

Fig.1 a zeigt einen derartigen schnellen optischen Modenschalter, basierend auf einem im Beleuchtungsstrahlengang angeordneten elektrooptischen Modulator EOM und passiven Phasenelementen P.
Die beispielhaft gezeigten passiven Phasenelemente bestehen hier jeweils aus einer Kombination eines doppelbrechenden Kristalls, dargestellt ist eine Phasenplatte P in Form einer geteilten $\lambda/2$-Platte, und einer bezüglich der Phase polarisationsrichtungsunabhängigen Komponente beispielweise als Glas ausgebildet. Dabei ist die Phasenplatte so ausgerichtet, dass die schnelle Richtung des Kristalls vorteilhaft parallel bzw. senkrecht oder in einem weiteren optimierten Winkel zur eingestrahlten Laserpolarisation ausgerichtet wird.
In Fig. 1b sind verschiedene Modifikationen der Phasenplatte P dargestellt, eine halbseitige Teilung in eine $\lambda/2$ Hälfte und eine Glashälfte in P1, eine Viertelteilung in gegenüberliegende $\lambda/2$ Viertel und Glasviertel in P2, einen aussenliegenden $\lambda/2$ Ring und einen inneren Glaskem in P3 und umgekehrt einen aussenliegenden Glasring und einen innenliegenden A/2 Kern in P4.
Glas ist hier nur beispielhaft aufgeführt. Auch amorphes Quarz [Suprasil] oder andere nicht doppelbrechende Materialien können zum Einsatz kommen.
Jeweils als Pfeil dargestellt ist die Orientierung der außerordentlichen Achse des jeweiligen $\lambda/2$ Teils. Durchtritt ein parallel zu dieser Pfeilrichtung polarisierter Lichtstrahl dieses Element, wird im $\lambda/2$ Teil eine Phasenverschiebung um eine halbe Wellenlänge relativ zum Glasteil erzeugt. Ist dessen Polarisation hingegen senkrecht zur Pfeilrichtung orientiert, wird keine Phasenverzögerung erzeugt.
Das Element P ist in Wirkverbindung mit dem EOM, der durch entsprechende Ansteuerung eine schnelle Drehung der Polarisationsrichtung PR des einfallenden Lichtstrahls L, meist eines linear polarisierten Laserstrahls, bewirkt.
Nach Durchgang durch P verläuft der Lichtstrahl, wie auch in den im weiteren dargestellten Anordnungen, in Richtung des Mikroskops M, über eine nicht dargestellte Scaneinheit zur Probe weiter, wie es auch aus dem Stand der Technik bekannt ist.

Durch die halbseitige Phasenänderung durch die Platte P erfährt der Lichtstrahl die FMM-typische Feldmodulation.
Zur Erfindung gehörig ist auch ein Regelverfahren, wobei vorteilhaft die Ausbildung des Phasenelementes, beispielsweise durch Auswechslung oder Ansteuerung eines SLM geändert wird und über eine Messung des Modulationskontrasts, beispielsweise über Messungen mit eingeschalteter Platte P und ausgeschwenkter Platte P (ohne FMM) eine Optimierung des FMM Signals erfolgen kann.
Im Rahmen der Erfindung kann auch eine Rotation der Platte P bei feststehendem Lichtstrahl L anstelle der Drehung der Polarisation durch den EOM erfolgen.

Fig. 1c) zeigt wie in Fig. 1a den schnellen optischen Modenschalter, basierend auf einem EOM und passiven Phasenelementen.
In Abb. 1c) wird der erfinderische Ansatz noch dahingehend erweitert, dass jetzt die Modulation der Polarisationsrichtung des Lasers vor der Einkopplung in eine Faser F erfolgen kann, wenn diese Faser wie bei polarisationserhaltenden Fasern bekannt, den Polarisationszustand des Lichtes erhält. Das Phasenelement befindet sich dann nach der Faser wieder in einer Pupille des optischen Systems.

Diese Ausführung ist insbesondere vorteilhaft, wenn im eigentlichen optischen System/Gerät/Mikroskop/Scankopf wenig Bauraum zur Verfügung steht.

Im Gegensatz zum Stand der Technik (z.B. Chen et al. [1]) kann hier durch die Verwendung der passiven Phasenelemente in Wirkverbindung mit der Faser eine elektro-magnetische Isolation des verwendeten EOM erfolgen, was vorteilhaft eine Beeinflussung der Meßanordnung durch die hochfrequent ausgestrahlten elektrischen Felder des EOM vermeidet. Der EOM kann auch vorteilhaft in einem Lasermodul separat untergebracht werden.

Wiederum sind in 1d) 4 mögliche Phasenplatten P1-P4 beispielhaft gezeigt.

Ausführung 2a

In einer weiteren vorteilhaften Ausführung wird erfindungsgemäß eine Lösung realisiert, in der die beiden Moden bereits vorliegen und mittels eines EOM, AOM oder AOTF zwischen diesen Moden geschaltet wird. Dieses Prinzip unterscheidet sich noch weitergehend von dem bislang dokumentierten Stand der Technik, da jetzt das Schalten im Fokus nicht über ein Schalten der optischen Phasen erfolgt, sondern zwischen zwei optischen Feldmoden. Hierbei wird ein äquivalenter Anfangs- und Endzustand hergestellt, wobei jedoch der Übergang von einer Konfiguration in die andere Konfiguration, gekennzeichnet durch die jeweilige Fokusfeldstruktur, inkohärent erfolgt.

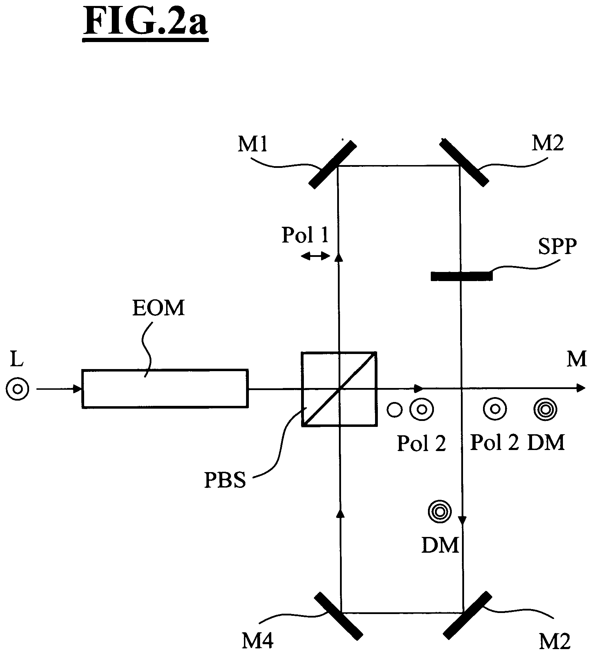

Abbildung 2a) zeigt einen schnellen optischen Modenschalter, basierend auf einem EOM, dem ein polarisierender Strahlteiler PBS im Lichtweg nachgeordnet ist.

Zur Lichtumlenkung sind nach dem PBS Spiegel M1- M4 vorgesehen.

Über M1-M4 wird eine von PBS erzeugte (reflektierte) Polarisationsrichtung Pol1 umgelenkt.

Zwischen M2 und M3 befindet sich ein Phasenelement, das für eine bestimmte Polarisationsrichtung einen Donut-Mode DM der Strahlverteilung erzeugt (SPP-Spiral phase plate, [5]), der an PBS nach M4 wieder mit dem durch PBS hindurchgehenden Anteil vereinigt wird.

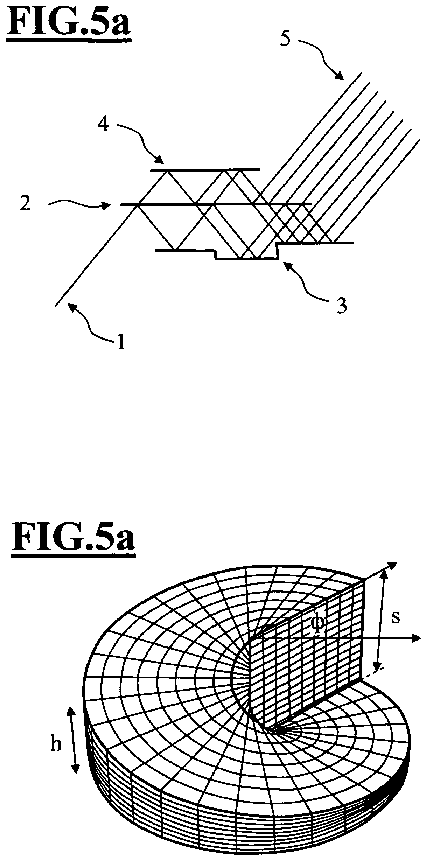

Abbildung 5b) zeigt ein Beispiel für eine Spiralphasenplatte aus:

New J. Phys. 6 (2004) 71
doi:10.1088/1367-2630/6/1 /071
PII: S1367-2630(04)80050-8
"Observation of the vortex structure of a non-integer vortex beam"
Jonathan Leach, Eric Yao and Miles J Padgett

Der linear polarisierte Laserstrahl L wird durch den wellenretardierenden EOM propagiert, der wie ein schnell schaltbarer Polarisationsdreher wirkt. Hierdurch wird das Licht auf seinem weiteren Weg entweder durch den folgenden polarisierenden Strahlteiler (PBS) transmittiert (z.B. das zur Blattebene parallel polarisierte Licht). Für die andere Polarisationsrichtung wird das Licht in der Zeichnung nach oben gelenkt und durchtritt ein Element wie eine Spiralphasenplatte SPP, die aus dem Gaußmode eine Donutmode erzeugt (z.B. [5])].

Alternativ können hier auch andere modenschaltende Elemente wie Subwellenlängenstrukturen oder DOEs (Diffractive Optical Elements) in diesen Strahl eingebracht werden. Das Licht wird hiernach wiederum am PBS reflektiert und ist mit dem Strahl der zweiten Polarisation gut zeitlich alternativ überlagert. Durch eine Modulation des EOM kommt es in der Folge zu einer Modulation der verschiedenen Feldmoden (pol1 2 bzw. GM)und damit zu einer Modulation des Lichtes im Fokus des Mikroskopobjektives.

Für die zeitabhängige Intensität des Lichtes, welches aus dem Fokalvolumen emittiert wird, gilt

$$I\,(t) \propto \int C(r) I_P(r,t) dr \quad .$$

Hier bezeichnet C(r) die räumlich variierende Konzentration anregbarer Moleküle. Das Integral erstreckt sich über einen Bereich, der das Fokalvolumen enthält. $I_p(r,t)$ bezeichnet die zeitlich variierende Anregungsintensität, die für den Fall des Umschaltens zwischen zwei Moden durch

$$I_P(r) \propto G(r)(1 + Cos(\omega t)) + LG(r)(1 + Sin(\omega t))$$

gegeben ist. Wichtig ist hierbei, dass im Wesentlichen nur das Licht im Fokus diese zeitliche Modulation erfährt, aber alles Licht außerhalb des Fokus nicht wesentlich oder aber wesentlich schwächer moduliert wird.

Mittels einer Lock-in-Detektion lässt sich dann der zeitlich variierende Anteil vom zeitlich konstanten Anteil separieren. Dieser zeitlich variierende Anteil entspricht der Differenz der beiden verschiedenen Fokusfelder, wobei der nichtmodulierte außerfokale Anteil zeitlich konstant ist und durch die phasenrichtige Detektion über z.B. eine Lock-in-Detektion entfällt.

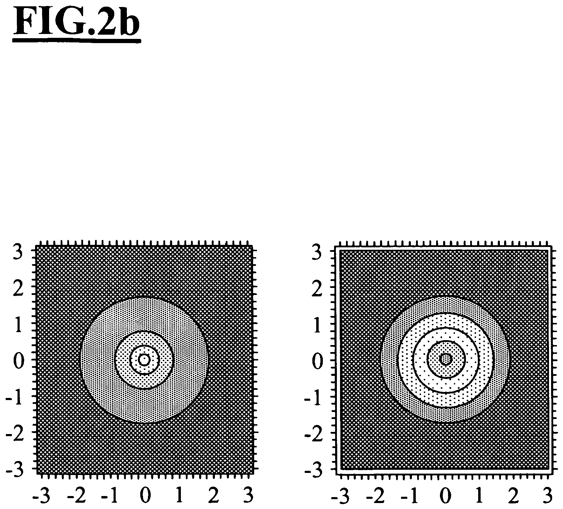

Abbildung 2b) zeigt die Intensitätsverteilung einer Gaußmode und einer Donutmode (Laguerre-Gauss-Mode). Die Achsen bezeichnen eine skalierte laterale räumliche Ausdehnung in der Fokalebene.

Die vorgeschlagene Lösung unterscheidet sich vom Stand der Technik insbesondere dadurch, dass hier das Lichtfeld nicht in der Pupille in seine Einzelteile zerlegt und über einen Phasenmodulator in verschiedenen räumlichen Teilen beeinflusst wird, sondern dass eine zeitlich variierende Umschaltung zwischen zwei verschiedenen Fokusfeldern erfolgt. Dadurch ergibt sich eine Reihe von Vorteilen für die praktische Umsetzung. Der signifikanteste Vorteil besteht zunächst in der erreichbaren Modulationsgeschwindigkeit.

Ein weiterer Vorteil der Lösung ist ihre einfache Erweiterbarkeit auf mehrere Fokalvolumina. Hierbei würde man beispielsweise mehrere Gaußsche Strahlen in die Anordnung einstrahlen und diese auf dem entsprechenden optischen Weg mittels eines Array-Transformators (z.B. eines Spiralphasenmaskenarrays) umformen.

Die Erzeugung mehrerer Fokalvolumina an sich ist beispielsweise in DE19904592, beschreiben worden (siehe auch Abb. 5a).

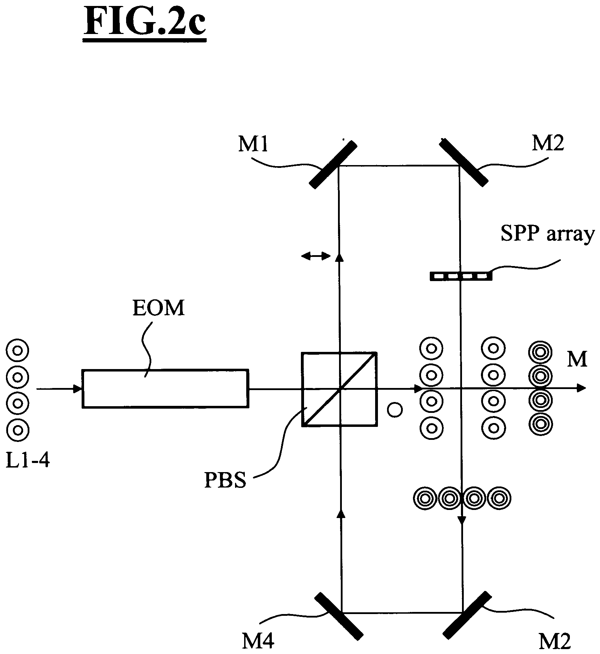

Eine schematische Ausführung wird in Abb. 2c gezeigt:

Dargestellt ist hier eine Multispotvariante zur Modenmodulation mit dem Beispiel von 4 vorzugsweise kollimierten Strahlen L1-4, die schließlich in das Mikroskop M in Richtung der Fokusebene fokussiert werden.

Der Durchlauf von L1-4 erfolgt analog Fig.2a durch die dort dargestellte Anordnung, wobei statt einer einzelnen Spiralphasenmaske hier ein SPP Array, schematisch durch vier SPP dargestellt, vorgesehen ist.

Für den Durchgang der Strahlen L1-4 durch den EOM kann dieser einen entsprechend großen Querschnitt aufweisen bzw. der Multispoterzeugung in Lichtrichtung auch vorgeordnet sein oder es können mehrere EOM für L1-4 , auch mit unterschiedlichen Modulationsfrequenzen, oder ein segmentierter EOM mit unterschiedlich angesteuerten Querschnittsbereichen , vorgesehen sein.

In Abb. 2c sind nur vier Strahlen dargestellt, wobei die Erfindung letztendlich auch vorteilhaft dafür ausgebildet sein kann, eine wesentlich größere Anzahl von Strahlen zu modulieren und somit eine quasi-konfokale Multifokusmikroskopie zu ermöglichen. Während für 4 Foki im descannten Modus noch individuelle Detektoren/Lock-In-Module verwendet werden können, eignet sich zur Detektion in letzterem Fall vorzugsweise ein Detektorarray im descannten Fall oder eine Kamera mit einem modulierbaren Verstärker (Multichannelplate) [4] oder auch smart-pixel CMOS-Kameras [3], die eine pixelweise Demodulation in der Kamera erlauben, im nondescannten oder direkten Detektionsmodus.

Ausführung 3

Das Umschalten zwischen zwei Moden kann zum Beispiel auch sehr schnell mittels eines akusto-optischen Modulators (AOM) erfolgen.

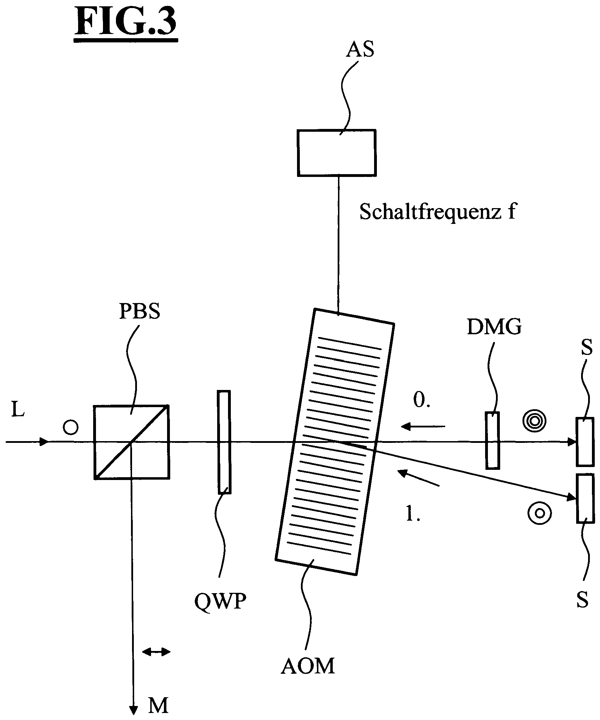

Fig. 3 zeigt das schnelle Umschalten zwischen zwei Feldmoden (z.B. Laguerre-Gauß und Gaußmode) mittels eines AOM, also Transformierung eines Gaußschen Feldes in eine zeitabhängige Überlagerung einer Gaußschen und Gauß-Laguerre-Mode. Es ist wiederum ein PBS vorgesehen.

Im durchgehenden Strahlengang nach dem PBS ist nach einer Viertelwellenplatte QWP, die der Polarisationsdrehung dient um den rückkehrenden Strahl durch den PBS in Richtung des weiteren Mikroskops M lenken zu können, ein AOM angeordnet, in dessen O. und erster Ordnung sich Reflektionselemente S befinden die das Licht in gleicher Richtung in den AOM zurückreflektieren.

In der 0. Ordnung ist im Strahlengang zwischen AOM und S ein -"Donut mode generator" DMG, (z.B. Spiral phase plate oder "radialer Polarisator") vorgesehen,

Diese Ausführung der Erfindung stellt eine vorteilhafte Variation der o.g. Ausführung 2a dar.

Hierbei wird ein Gausscher Strahl mit einer linearen Polarisation durch einen polarisierenden Strahlteiler und eine die Polarisation beeinflussende Viertelwellenplatte, in einen von einer Ansteuereinheit AS angesteuerten AOM oder AOTF (für sehr schnelle Schaltung ein AOM; bei langsamerer, aber polychromatischer Modulation kann auch ein AOTF eingesetzt werden) eingestrahlt. Im AOM kann sich nun durch Einstrahlung eines akustischen Feldes ein zeitlich variierendes Gitter ausbilden, an welchem dieser Strahl zum Beispiel jeweils in seine 0. und seine 1. Ordnung abgelenkt wird. Zwischen diesen Ordnungen wird also schnell (hochfrequent) hin- und hergeschaltet. Der Stahl durchtritt dann wiederum auf einem der Wege ein modenerzeugendes Element wie z.B. ein donut mode erzeugendes Element DMG, wobei neben Donut-Moden auch andere modenerzeugende Elemente, z.B. zur Erzeugung höhere Gauss-Laguerre-Moden, denkbar sind, und wird nachfolgend an einem ersten Spiegel reflektiert. Danach wird das Element ein zweites Mal durchtreten. Die andere Ordnung wird hingegen nur an einem Spiegel reflektiert. Beide Ordnungen durchtreten dann wiederum den AOM und werden dabei wieder im AOM in eine Strahlrichtung gebracht, wobei sie in der Regel, jedoch im Einzelfall abhängig vom modenerzeugenden Element, wieder in der linearen Ausgangpolarisation den AOM verlassen. Durch Drehung dieses Feldes mittels einer Viertelwellenplatte QWP wird der Strahl dann zur Reflektion am polarisierenden Strahlteilerwürfel PBS gebracht und kann somit in Richtung des Mikroskops M und der Probe gelangen.

Die Detektion der emittierten Fluoreszenzstrahlung erfolgt mit entsprechenden optoelektronischen Detektoren und einer optischen oder elektronischen Demodulation.

Erläuterung der verwendeten Detektionstechniken:

LOCK-IN-Technik

Lock-in-Techniken (LIT) basieren auf der phasenabhängigen Messung zeitlich modulierter Signale, wobei die Grundlage eine Frequenzreferenz bildet. Typischerweise wird die Probe mit einer bestimmten Frequenz angeregt, während der LI das Signal bei der Referenzfrequenz misst.

Das Lock In - System LI detektiert das Signal bei dieser bestimmten Referenzfrequenz in Abhängigkeit von der Referenzphasenlage.

In fester Beziehung zur Referenzphase erzeugen LI-Verstärker ihre eigene interne Messphase (in der Regel durch einen sog. Phase-locked-loop)

$$LI_{ref} = V_L \sin(\omega_L t + \theta_{ref})$$

In einem klassischen LI-Verstärker wird zunächst das Signal verstärkt und nachfolgend mit der LI-Referenz $LI_{ref}$ mittels eines phasensensitiven Detektors (PSD) oder eines Multiplikators multipliziert.

Wird zum Beispiel das Signal beschrieben durch

$$S(t) = V_S \sin(\omega_S t + \theta_S) \,,$$

so erhält man am Ausgang des PSD

$$V_{PSD} = V_S V_L \sin(\omega_r t + \theta_S)\sin(\omega_L t + \theta_{ref})$$
$$= 1/2 V_S V_L (\cos([\omega_r - \omega_L]t + \theta_S - \theta_{ref}) - \cos([\omega_r + \omega_L]t + \theta_S + \theta_{ref}))$$

Somit liefert der Ausgang des PSD zwei zeitlich variierende Signale: eines bei der Differenz- und eines bei der Summenfrequenz von LI-Referenzphase und Signalphase. Dieses Signal $VI_{PSD}$ wird tiefpaßgefiltert, wodurch alle hochfrequenten Signale entfallen. Bei einem perfekten Tiefpass ergibt sich schließlich nur dann ein Signal, wenn $(\omega_r - \omega_L) = 0$ gilt. Damit erhält man am Ausgang

$$V_{PSD,TP} = 1/2 V_S V_L \cos(\theta_S - \theta_{ref}) \,.$$

Der LI-Verstärker extrahiert somit das Signal bei der Frequenz $\omega_r = \omega_L$ und liefert selbst ein Ausgangssignal, welches linear von der Signalamplitude bei dieser Referenzfrequenz abhängt.

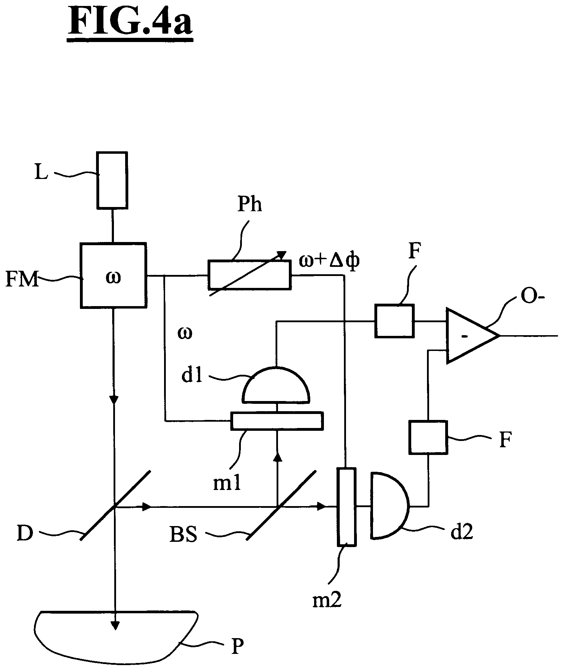

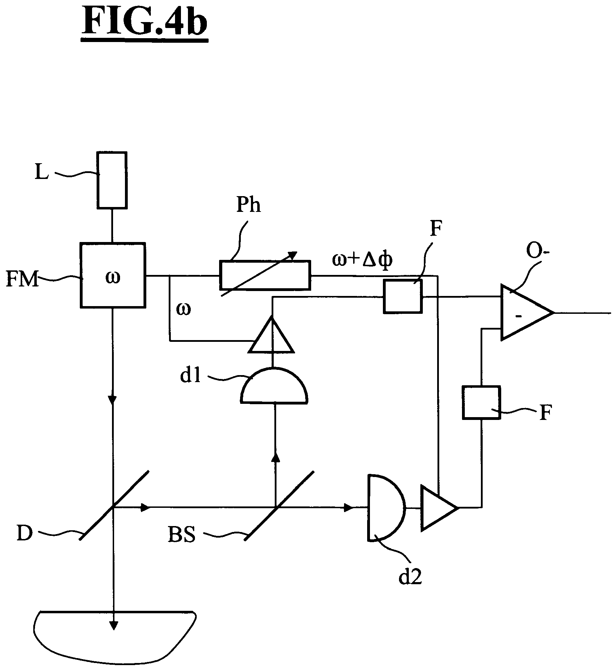

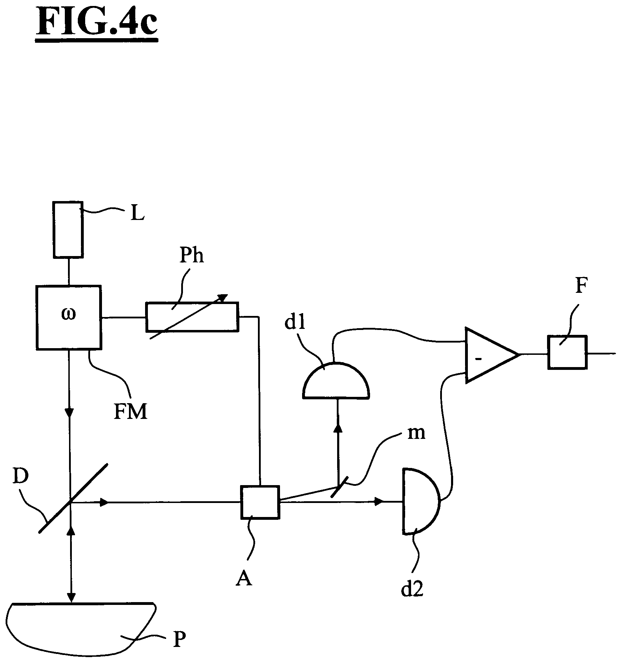

Im Weiteren werden anhand Fig. 4 a) und b) Anordnungen zur FMM Modulation in Ganzen dargestellt und beschrieben, die auch zum Stand der Technik (lock in Verfahren) alternative Anordnungen zur demodulierenden Detektion enthalten und mit den o.g. Erfindungen vorteilhaft zusammen eingesetzt werden können.

Erfindungsgemäß werden optische Modulatoren zur Demodulation in der Detektion eingesetzt oder die Betriebsweise der Detektoren zur Demodulation genutzt.

Abbildung 4a) zeigt einen Mikroskopaufbau zur Erhöhung der Eindringtiefe/Streulichtunterdrückung wobei in einem schematischen Strahlengang von einem Laser L in Richtung einer Probe P ein dichroitischer Teilerspiegel D zur Trennung von Beleuchtungs- und Detektionsstrahlengang vorgesehen.

Die Detektion wird über einen Strahlteiler BS in zwei Teilstrahlengänge aufgespalten, in denen sich Detektoren d1, d2 befinden:

Weiterhin dargestellt sind optische Modulatoren m1, m2, ein Element Ph zur Phaseneinstellung, ein Filter F, ein Fokus- Modulator FM sowie ein Subtraktionsoperator O-.

Der Laser L zur Fluoreszenzanregung wird mit einem Fokus-Modulator (FM) wie beispielsweise anhand Fig. 1 und 2 beschrieben mit der Frequenz $\omega$ moduliert.

Die über den Dichroiten (D) reflektierte, nun ebenfalls mit $\omega$ modulierte FluoreszenzStrahlung der Probe (P) wird über einen 50/50 Strahlteiler (BS) von zwei Detektoren d1 und d2 phasensensitiv detektiert. Dazu wird beispielsweise vor d1 und d2 jeweils noch ein Modulator m eingesetzt (m1, m2 in 3a) oder der Detektor-gain von d1 und d2 wird moduliert (3b).

Die geglätteten Signale (Filter F, z.B. Integrator) werden dann voneinander subtrahiert (Operator O-).

Die Modulatoren M1, m2 können vorteilhaft optische Modulatoren wie EOM sein. m1 wird direkt moduliert und m2 erfährt eine Phasenverschiebung über Ph, dadurch werden zwei Teilsignale detektiert, die zueinander eine Phasendifferenz aufweisen (Delta Phi) und gemischt und mit Tiefpassfilter gefiltert, es erfolgt also vorteilhaft eine optische Demodulation mit eingestellter Relativphase, im Idealfall von 90 Grad zwischen den beiden Detektionskomponenten, um die Zustände mit intaktem Fokus und die verschobenen Zustände in denen der Fokus durch die destruktive Interferenz gestört ist, voneinander subtrahieren zu können (- Operator), so wird auf jedem Pixel vom Signal aus dem Fokus der außerfokale Hintergrund (Streulicht) abgezogen.

In Fig. 4b wird nicht das optische Signal moduliert sondern der "gain" der Detektoren (z.B. Beschleunigungsspannung eines PMT), jeweils über FM angesteuert und wieder über Ph die Phase eingestellt, die Signale mit F gefiltert und mit O-subtrahiert.

Die Detektoren d1, d2 werden beispielsweise mit Frequenz $\omega$ (und eingestellter Phasenverschiebung) ein- und ausgeschaltet.

Optische Modulation im Detektionsstrahlengang:

Erfindungsgemäß wird mittels AOM eine Strahlumschaltung zur Demodulation genutzt. Abbildung 4c) zeigt einen Strahlengang ähnlich wie in Fig. 3 dargestellt.

Hier wird zwischen jedoch zwischen den Detektoren d1 und d2 mit der Frequenz $\omega$ umgeschaltet, vorteilhaft mittels eines AOD (A), ähnlich wie in Fig.2 dargestellt, jedoch hier in der Detektion.

Wiederum und wie schon dargestellt und erläutert erfolgt eine Subtraktion der in-Fokus und ausser-Fokus Signale und Tiefpass-Filtern.

Dadurch dass kein Strahlteiler verwendet wird geht nicht jeweils die Hälfte der Signalintensität verloren. Über Ph kann der Phasenunterschied eingestellt werden.

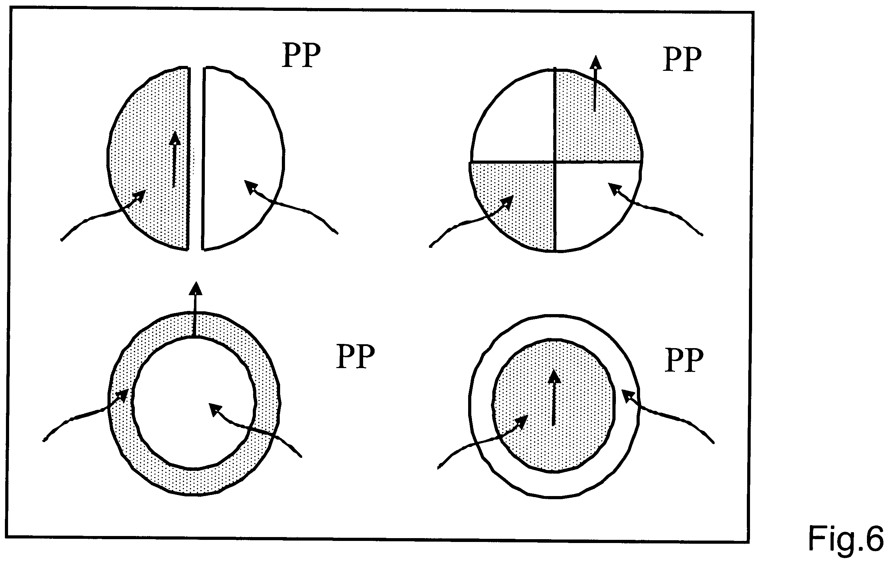

In Fig. 6-8 sind weitere vorteilhafte Ausführungen ergänzend dargestellt. Die erste Ergänzung betrifft die Struktur der Phasenplatte selbst. Diese wurde ursprünglich so beschrieben, dass sie aus einer Kombination einer lambda/2-Platte und einer isotrop wirkenden Platte besteht. Allerdings sind allgemeiner auch weitere Kombinationen denkbar.

Zum Beispiel kann dies erreicht werden, wenn die Platte PP wie in Fig. 6 aus Bereichen zusammengesetzt sein, die die Wirkung einer lambda-Platte (und damit die Phase entsprechend um lambda und nicht lambda/2 schieben) haben und Bereichen, in denen eine lambda/2-Phasenschiebung erreicht wird. Im Allgemeinen kann jeder beliebige Phasenhub in verschiedenen Teilbereichen der Phasenplatte realisiert werden, wenn man den Differenzbetrag auf den vorteilhaften Wert von lambda/2 einstellt. Die in Fig. 1 dargestellten unterschiedlichen Ausführungen einer Kombination von unterschiedlichen Bereichen kann wie in Fig. 6 dargestellt, auch für unterschiedliche Bereiche, die beispielsweise eine Phasenverzögerung von lambda oder lambda / halbe wie dargestellt aufweisen. Besonders vorteilhaft ist es zudem, den Phasenhub der beiden Teilbereiche gegeneinander zu achromatisieren. Dies kann durch sogenannte "achromatische Wellenplatten" oder "achromatische Verzögerungsplatten" realisiert werden, die beispielsweise aus unterschiedlichen doppelbrechenden Kristallen bestehen und für einen breitbandigen Wellenlängenbereich dieselben optischen Eigenschaften (dieselbe Phasenverzögerung) aufweisen und wobei dann der Phasenverlauf der isotropen Teilplatte darauf angepasst wird, indem bspw. Platten, die aus mindestens zwei Gläsern bestehen, verwendet werden.

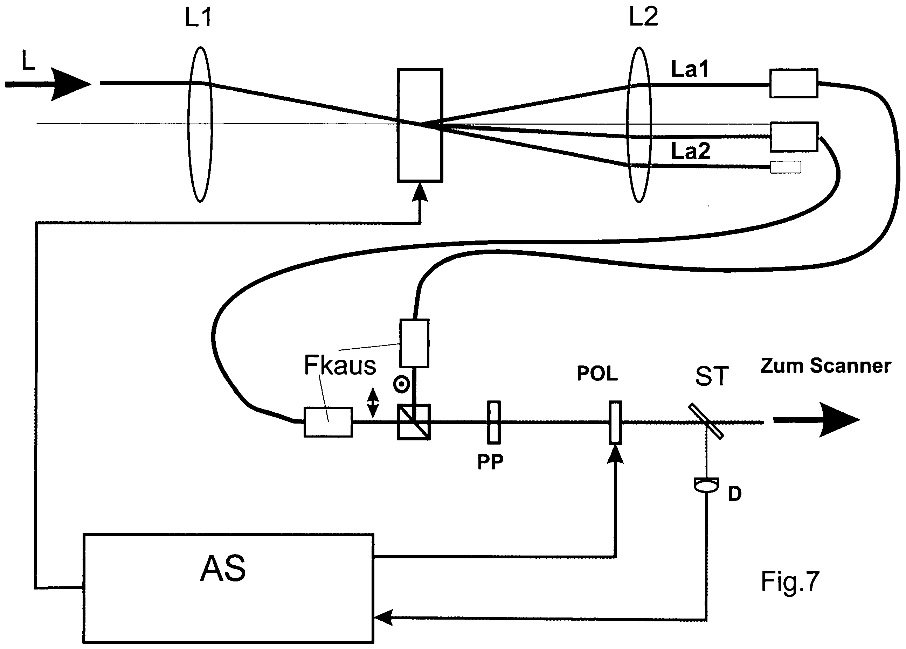

Bezüglich der Beleuchtung der Phasenplatte wurde vorausgesetzt, dass die Polarisationsrichtung der Beleuchtung sehr schnell schaltbar ist. Hierfür wurde weiter oben zum Beispiel ein EOM vorgeschlagen, mit welchem eben diese schnelle Drehung der Polarisationsrichtung ermöglicht würde. Die Lichtzuführung zur Phasenplatte wurde dabei so beschrieben, dass eine Lichtzuführung durch eine optische Faser erfolgen kann, wobei die Polarisation erhalten bleiben muss. Weiterhin ist jedoch erkannt worden, dass eine weitere und in verschiedener Hinsicht vorteilhaftere Lösung erreicht werden kann, wenn man das polarisierte Licht über zwei Fasern der Phasenplatte zuführt. Hierbei wird, wie in Fig.7 gezeigt, das Licht mit einer definierten Polarisation in zwei polarisationserhaltende Fasern eingekoppelt, wobei zwischen den beiden Eingängen der Fasern mit der Frequenz F geschaltet werden kann. Der Ausgang einer der Fasern wird dann an der Auskoppelstelle so gegenüber dem Ausgang der zweiten Faser eingestellt, dass die Polarisationsrichtungen senkrecht zueinander stehen. Das erlaubt die Zusammenführung beider Polarisationsrichtungen in einem polarisierenden Strahlteilerwürfel (PBS), bzw. einer anderen geeigneten Art der optischen Zusammenführung wie z.B. optische Faserkoppler, sodass die an einem Ausgang des PBS eine mit der Frequenz F variierende Polarisation emittiert wird. Die Schaltung zwischen den Fasereingängen kann zum Beispiel mit einem Acoustooptischen Modulator (oder auch akousto-optischen Scanner) wie in Fig. 7 dargestellt erfolgen. Dabei wird die Schallwelle in dem Kristall zwischen den beiden Werten $f_{ac}^1$ und $f_{ac}^2$ mit der Frequenz F geschaltet. Die akustischen Frequenzen $f_{ac}^1$ und $f_{ac}^2$ erzeugen dabei je einen verschiedenen Ablenkungswinkel des Lichtstrahls in La1 und La2. Diese räumliche Aufspaltung wird genutzt, um in die jeweiligen optischen Fasern einzukoppeln. Die elektronische Generierung der beiden Frequenzen kann beispielsweise mit einem DDS (Direct digital synthesizer) oder anderen geeigneten Frequenzschaltern erfolgen.

Eine weitere und insbesondere vorteilhafte Lösung ergibt sich dadurch, dass die Frequenzen $f_{ac}^1$ und $f_{ac}^2$ permanent am akusto-optischen Kristall anliegen und die Amplituden der beiden Komponenten zeitlich moduliert werden. Für das Verfahren macht man das sinnvollerweise so, dass die Summenintensität zeitlich konstant bleibt. Eine technische Realisierung kann zum Beispiel mittels eines DDS (direct digital synthesizer) erfolgen.

Die Vorteile der dargestellten Ausführung ergeben sich daraus, dass

1) zur Schaltung ein akusto-optisches Element dient, welches kleiner ist und in der Handhabung in einem Mikroskop deutliche Vorteile aufweist
2) die Fasern direkt für die Lichtzuführung vom Lasermodul zum Scankopf eines LSM genutzt werden können.

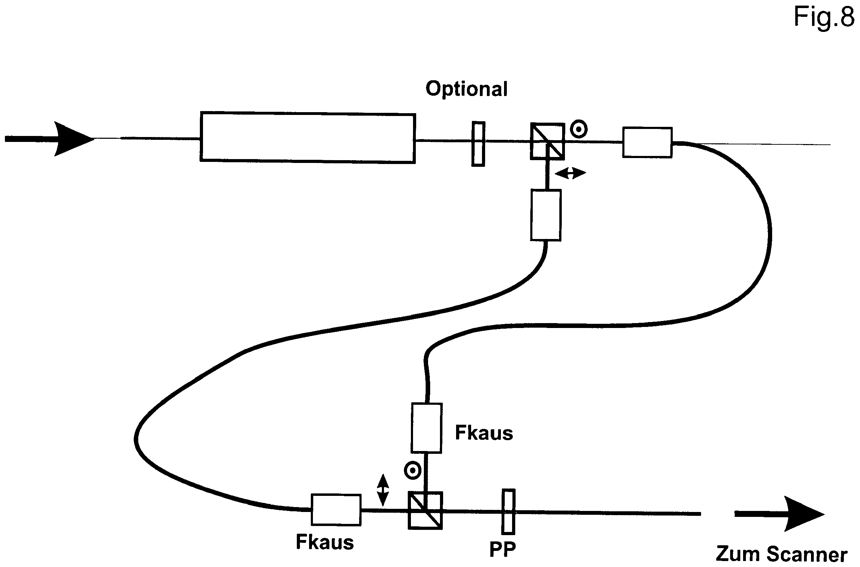

Ebenso ist denkbar, dass man mit einem EOM in Kombination mit einem PBS eine schnell schaltende Faserkopplung realisiert. Hierbei befindet sich hinter dem EOM ein PBS, welcher das Licht direkt in beide Fasern in Abhängigkeit des Polarisationszustandes verteilt (Fig.8).

Es kann weiterhin von Vorteil sein, wenn die Polarisation nach dem PBS einen vorgegebenen Wert hat. Hierzu kann nach der Phasenplatte ein drehbarer oder in anderer Weise bezüglich seiner Polarisationsbeeinflussung einstellbarer Polarisator eingebracht werden.

Mit diesem kann auch ein Intensitätsabgleich zwischen den beiden Teilstrahlen nach den Lichtleitfasern erfolgen.

Die diesbezügliche Messung kann im Mikroskop oder mit einer externen Monitordiode durchgeführt werden.

Für einen genaueren Abgleich zwischen den Teilstrahlen und der Einstellung des AOM/ EOM und des einstellbaren Polarisators Pol kann ein Teil des Strahls nach dem PBS auf eine Diode D ausgekoppelt werden.

Die Intensitätsschwankungen, die mit der Diode gemessen werden, werden unter anderem als Steuergröße genutzt, um die maximalen Amplituden der Frequenzen $f_{ac}^1$ und $f_{ac}^2$ einzustellen.

Bislang wurde von jeweils zwei Fasern und Frequenzen ausgegangen. Dies ist im Sinne eines Beispiels zu verstehen. Das Verfahren kann allerdings im allgemeinen Fall auf die Schaltung von N Lichtzuständen mit zum Beispiel N Fasern genutzt werden.

Im Weiteren werden die Abbildungen im Detail beschrieben.

Fig. 7 beschreibt das schnelle Schalten der Polarisation mittels eines AOD in Kombination mit einer Faseroptik F1, F2 zur Erzeugung des Phasenschaltens mittels einer geeigneten Phasenplatte PP. Ausführungsbeispiele zum Abgleich der Intensitäten beider Schaltzustände sind gezeigt.

Das Licht der Laserlichtwelle L wird über eine Linse L1 in die Ebene eines AOD (Akustooptischer Ablenker) eingestrahlt dessen Schallwelle im Kristall mit einer Frequenz F zwischen verschiedenen akustischen Frequenzen F1 und F2 umgeschaltet wird, die alternierend unterschiedliche Ablenkwinkel des Laserstrahl erzeugen.

Die alternierend abgelenkten Laserstrahlen La1, La2 werden jeweils über Faser-Einkoppler FKein in Lichtleiter F1, F2 eingeleitet und mittels Faserauskopplern FKaus aus an unterschiedlichen Positionen an einem Polteiler PBS ausgekoppelt.

Die Fasern F1 und F2 werden hierbei so eingerichtet dass ihre (vorzugsweise lineare) Polarisation am PBS seitlich und von oben zueinander senkrecht steht.

Das wird durch entsprechendes Verdrehen der Faserenden bzw. der Auskoppeleinheiten bewirkt, wobei hinter dem PBS jeweils für F1 und F2 anhand der Signalausbeute die optimale Stellung am PBS eingestellt werden kann.

Nach dem PBS ist die Phasenplatte PP wie in Fig. 6 beschrieben angeordnet und erzeugt durch den Phasensprung zwischen ihren Hälften das FMM Signal zur Weiterleitung in das Mikroskop und zur Scaneinrichtung.

Über einen Strahlteiler ST kann eine Monitordiode D ausgekoppelt werden, die über eine Ansteuereinheit AS zur Einstellung der Signalintensitäten und des Verhältnisses der beiden Polkomponenten dient.

Dabei ist zwischen PP und ST vorteilhaft ein drehbarer Polarisator vorgesehen, der zur Feinabstimmung des Verhältnisses der beiden Polkomponenten und zum Ausgleich möglicher Fehler bei der Orientierung der Fasern F1, F2 zueinander wie oben erwähnt, dienen kann.

Über AS kann die Detektion über die Monitordiode an die Frequenz der Umschaltung durch den AOD synchronisiert sein, so dass sich die einzelnen Intensitätskomponenten voneinander trennen lassen.

Fig. 8 beschreibt eine weitere Ausführung mit einem EOM zur Umschaltung der Polarisation und damit der Phase nach der Phasenplatte in Verbindung mit den Komponenten, wie oben anhand Fig. 7 dargestellt, in analoger Wirkungsweise wie in Fig7. Hier erfolgt allerdings die Trennung in die einzelnen Polarisationskomponenten durch einen Polteiler PBS1 hinter dem EOM, wobei nach dem PBS die unterschiedlichen Polkomponenten wiederum in getrennte Fasern F1, F2 eingekoppelt werden, die am PBS 2 wiederum durch Orientierung der Fasern bzw. der Auskopplungen FK mit zueinander senkrechten Polarisationen eingestrahlt werden.

**Patentansprüche**

1. Laser-Scanning-Mikroskop mit

   - mindestens einem Laser (L) zur Erzeugung eines Beleuchtungsstrahls,
   - einem Mikroskopobjektiv zur Fokussierung des Beleuchtungsstrahls in eine Probe sowie
   - einem Detektionsstrahlengang mit mindestens einem optoelektronischen Detektor (d1, d2) und
   - mindestens einem Mittel zur Demodulation (m1, m2, A),

   **dadurch gekennzeichnet, dass**
   mindestens ein zeitlich, periodisch polarisationsänderndes Element (EOM) im Beleuchtungsstrahlengang angeordnet ist, dem eine Phasenplatte (P) nachgeordnet ist, so dass eine Phasenmodulierung des Beleuchtungsstrahls in einem Teilbereich entlang seines Querschnitts mit einer zeitlichen Modulationsfrequenz (ω) in mindestens zwei Bereiche mit unterschiedlicher Phasenbeeinflussung aufweist, wobei das Mittel zur Demodulation(m1, m2, A) die Modulationsfrequenz (ω) optisch oder elektronisch demoduliert.

2. Mikroskop nach Anspruch 1, wobei das zeitlich, periodisch polarisationsändernde Element ein polarisationsdrehendes Element ist

3. Mikroskop nach Anspruch 2, wobei das polarisationsdrehende Element ein elektrooptischer Modulator (EOM) ist.

4. Mikroskop nach einem der vorangehenden Ansprüche, wobei die Phasenplatte (P) einen Bereich oder Bereiche mit im Wesentlichen nicht beeinflusster Phase und einen Bereich oder Bereiche mit beeinflusster Phase aufweist.

5. Mikroskop nach Anspruch 4, wobei der Bereich oder die Bereiche mit beeinflusster Phase mindestens eine lambda / halbe Platte ist.

6. Mikroskop nach einem der vorangehenden Ansprüche, wobei das Mittel zur Demodulation elektronische Mittel sind.

7. Mikroskop nach einem der vorangehenden Ansprüche, wobei das Mittel zur Demodulation ein AOM oder EOM .

8. Mikroskop nach einem der vorangehenden Ansprüche, wobei zwischen dem zeitlich, periodisch polarisationsändernden Element (EOM) und der Phasenplatte (P) eine Lichtleitfaser angeordnet ist.

9. Mikroskop nach einem der vorangehenden Ansprüche, wobei die Phasenplatte (P) zur Polarisationsänderung selbst drehbar ausgebildet ist.

10. Mikroskop nach einem der vorangehenden Ansprüche, wobei die Phasenplatte (P) ein räumlicher Lichtmodulator ist.

11. Mikroskop nach einem der vorangehenden Ansprüche, wobei die Phasenplatte (P) unterschiedliche Bereiche, insbesondere Bereiche mit unterschiedlicher Phasenverzögerung aufweist die zueinander einen Phasensprung von lamda / halbe aufweisen.

12. Mikroskop nach einem der vorangehenden Ansprüche, wobei ein akustooptischer Ablenker vorgesehen ist, der das Beleuchtungslicht abwechselnd oder simultan mit modulierter Amplitude auf die Eingänge mindestens zweier Lichtleitfasern lenkt.

13. Mikroskop nach einem der vorangehenden Ansprüche, wobei nach dem polarisationsändernden Element (EOM) Einkoppelmittel zur Einkopplung in mindestens zwei Lichtleitfasern vorgesehen sind.

14. Mikroskop nach einem der vorangehenden Ansprüche, wobei im Wechsel in die Lichtleitfasern eingekoppelt wird oder durch eine Amplitudenmodulation eine zeitabhängige Wichtung von mindestens zwei Lichtkomponenten erzeugt wird.

15. Mikroskop nach einem der vorangehenden Ansprüche, wobei in die Lichtleitfasern eine Einkopplung jeweils unterschiedlicher Polarisationsorientierung erfolgt.

16. Mikroskop nach einem der vorangehenden Ansprüche, wobei die Enden der Lichtleitfasern oder ihre Auskopplungen an einem Polteiler zueinander so orientiert sind, dass zwei unterschiedlich polarisierte Strahlungsanteile vorliegen.

17. Mikroskop nach einem der vorangehenden Ansprüche, wobei die unterschiedlich orientierten Polarisationsanteile über die Phasenplatte (P) in Richtung der Probe gelangen.

18. Mikroskop nach einem der vorangehenden Ansprüche, wobei nach der Phasenplatte (P) ein verstellbarer Polarisator angeordnet ist.

19. Mikroskop nach einem der vorangehenden Ansprüche, wobei nach der Phasenplatte (P) ein Teil der Strahlung auf einen Referenzdetektor zur Steuerung der Polarisationsverteilung und/oder des AOD oder EOM ausgeblendet wird.

20. Mikroskop nach einem der vorangehenden Ansprüche, wobei das Mittel zur Demodulation eine Lock-In-Verstärkung ist.

21. Verfahren zur mikroskopischen Erfassung von Licht einer Probe, die mit mindestens einem Beleuchtungsstrahl über ein Mikroskopobjektiv in einem Laser-Scanning-Mikroskop zur Fokussierung beleuchtet wird, wobei der Beleuchtungsstrahl in einem Teilbereich entlang seines Querschnitts mit einer zeitlichen Modulationsfrequenz ($\omega$) phasenmoduliert wird, indem mittels mindestens eines zeitlich, periodisch polarisationsändernden Elementes (EOM) eine Polarisationsänderung erfolgt und mittels einer dem polarisationsändernden Element nachgeordneten Phasenplatte (P), die mindestens zwei Bereiche mit unterschiedlicher Phasenbeeinflussung aufweist, die Phasenmodulation erzeugt wird, wobei in einem Detektionsstrahlengang eine optische oder elektronische Demodulation mit der Modulationsfrequenz erfolgt,.

22. Verfahren nach Anspruch 21, wobei als zeitlich, periodisch polarisationsänderndes Element ein elektrooptischer Modulator (EOM) eingesetzt wird.

23. Verfahren nach einem der Ansprüche 21 oder 22, wobei über eine Messung des Probensignals bei einem Wechsel zwischen unterschiedlichen Phasenplatten eine Regelung erfolgt, die der Optimierung des Messergebnisses dient.

24. Mikroskopieverfahren nach einem der Ansprüche 21 bis 23, wobei die Phasenplatte (P) unterschiedliche Bereiche, insbesondere Bereiche mit unterschiedlicher Phasenverzögerung aufweist die zueinander einen Phasensprung von lamda / halbe aufweisen.

25. Mikroskopieverfahren nach einem der Ansprüche 21 bis 24, wobei ein akustooptischer Ablenker vorgesehen ist, der das Beleuchtungslicht abwechselnd oder simultan mit modulierter Amplitude auf die Eingänge mindestens zweier Lichtleitfasern lenkt.

26. Mikroskopieverfahren nach einem der Ansprüche 21 bis 25, wobei nach dem polarisationsändernden Element (EOM) Einkoppelmittel zur Einkopplung in mindestens zwei Lichtleitfasern vorgesehen sind.

27. Mikroskopieverfahren nach einem der Ansprüche 21 bis 26, wobei im Wechsel in die Lichtleitfasern eingekoppelt wird oder durch eine Amplitudenmodulation eine zeitabhängige Wichtung von mindestens zwei Lichtkomponenten erzeugt wird.

28. Mikroskopieverfahren nach einem der Ansprüche 21 bis 27, wobei in die Lichtleitfasern eine Einkopplung jeweils unterschiedlicher Polarisationsorientierung erfolgt.

29. Mikroskopieverfahren nach einem der Ansprüche 21 bis 28, wobei die Enden der Lichtleitfasern oder ihre Auskopplungen an einem Polteiler zueinander so orientiert sind, dass zwei unterschiedlich polarisierte Strahlungsanteile vorliegen.

30. Mikroskopieverfahren nach einem der Ansprüche 21 bis 29, wobei die unterschiedlich orientierten Polarisationsanteile über die Phasenplatte (P) in Richtung der Probe gelangen.

31. Mikroskopieverfahren nach einem der Ansprüche 21 bis 30, wobei nach der Phasenplatte (P) ein verstellbarer Polarisator angeordnet ist.

32. Mikroskopieverfahren nach einem der Ansprüche 21 bis 31, wobei nach der Phasenplatte (P) ein Teil der Strahlung auf einen Referenzdetektor zur Steuerung der Polarisationsverteilung und/oder des AOD oder EOM ausgeblendet wird.

**Claims**

1.  Laser scanning microscope comprising

    - at least one laser (L) for producing an illumination beam,
    - a microscope objective for focusing the illumination beam into a sample, and
    - a detection beam path comprising at least one optoelectronic detector (d1, d2) and
    - at least one means for demodulation (m1, m2, A),

    **characterized in that**
    at least one element (EOM) that changes polarization periodically and over time is arranged in the illumination beam path, a phase plate (P) being disposed downstream of said element such that a phase modulation of the illumination beam in a portion along its cross section with a temporal modulation frequency ($\omega$) has in at least two regions with different phase influencing, wherein the means for demodulation (m1, m2, A) optically or electronically demodulates the modulation frequency ($\omega$).

2.  Microscope according to Claim 1, wherein the element that changes polarization periodically and over time is a polarization rotating element.

3.  Microscope according to Claim 2, wherein the polarization rotating element is an electro-optical modulator (EOM).

4.  Microscope according to any one of the preceding claims, wherein the phase plate (P) has a region or regions with substantially non-influenced phase and a region or regions with influenced phase.

5.  Microscope according to Claim 4, wherein the region or the regions with influenced phase is at least one lambda/2 plate.

6.  Microscope according to any one of the preceding claims, wherein the means for demodulation are electronic means.

7.  Microscope according to any one of the preceding claims, wherein the means for demodulation an AOM or an EOM.

8.  Microscope according to any one of the preceding claims, wherein an optical fibre is arranged between the element (EOM) that changes polarization periodically and over time and the phase plate (P).

9.  Microscope according to any one of the preceding claims, wherein the phase plate (P) has a self-rotatable embodiment for polarization-changing purposes.

10. Microscope according to any one of the preceding claims, wherein the phase plate (P) is a spatial light modulator.

11. Microscope according to any one of the preceding claims, wherein the phase plate (P) has different regions, in particular regions with different phase retardation, which have a phase shift of lambda/2 to one another.

12. Microscope according to any one of the preceding claims, wherein an acousto-optic reflector is provided, the latter steering the illumination light, either alternately or simultaneously, with modulated amplitude to the inputs of at least two optical fibres.

13. Microscope according to any one of the preceding claims, wherein coupling means for input coupling into at least two optical fibres are provided downstream of the polarization-changing element (EOM).

14. Microscope according to any one of the preceding claims, wherein there is alternate input coupling into the optical fibres or a time-dependent weighting of at least two light components is produced by way of an amplitude modulation.

15. Microscope according to any one of the preceding claims, wherein there is input coupling into the optical fibres with, in each case, a different polarization orientation.

16. Microscope according to any one of the preceding claims, wherein the ends of the optical fibres or the output coupling therefrom are oriented to one another at a polarization splitter in such a way that two differently polarized radiation components are present.

17. Microscope according to any one of the preceding claims, wherein the differently oriented polarization components reach the direction of the sample via the phase plate (P).

18. Microscope according to any one of the preceding claims, wherein an adjustable polarizer is arranged downstream of the phase plate (P).

19. Microscope according to any one of the preceding claims, wherein part of the radiation is masked on a reference detector downstream of the phase plate (P) for the purposes of controlling the polarization distribution and/or the AOD or EOM.

20. Microscope according to any one of the preceding claims, wherein the means for demodulation is a lock-in amplification.

21. Method for capturing light in a sample by microscopy, said sample being illuminated for focussing by at least one illumination beam via a microscope objective in a laser scanning microscope, wherein the illumination beam is phase modulated in a portion along its cross section with a modulation frequency ($\omega$) over time by virtue of a change in polarization being brought about by means of at least one element (EOM) that changes the polarization periodically and over time and by means of a phase plate (P) that is disposed downstream of the polarization-changing element, said phase plate having at least two regions with different phase influencing, the phase modulation is produced, wherein, in a detection beam path, there is optical or electronic demodulation with the modulation frequency.

22. Method according to Claim 21, wherein an electro-optical modulator (EOM) is used as element that changes the polarization periodically and over time.

23. Method according to either of Claims 21 and 22, wherein closed-loop control which serves to optimize the measurement result is effectuated by way of a measurement of the sample signal in the case of a change between different phase plates.

24. Microscopy method according to any one of Claims 21 to 23, wherein the phase plate (P) has different regions, in particular regions with different phase retardation, which have a phase shift of lambda/2 to one another.

25. Microscopy method according to any one of Claims 21 to 24, wherein an acousto-optic reflector is provided, the latter steering the illumination light, either alternately or simultaneously, with modulated amplitude to the inputs of at least two optical fibres.

26. Microscopy method according to any one of Claims 21 to 25, wherein coupling means for input coupling into at least two optical fibres are provided downstream of the polarization-changing element (EOM).

27. Microscopy method according to any one of Claims 21 to 26, wherein there is alternate input coupling into the optical fibres or a production of time-dependent weighting of at least two light components by way of an amplitude modulation.

28. Microscopy method according to any one of Claims 21 to 27, wherein there is input coupling into the optical fibres with, in each case, a different polarization orientation.

29. Microscopy method according to any one of Claims 21 to 28, wherein the ends of the optical fibres or the output coupling therefrom are oriented to one another at a polarization splitter in such a way that two differently polarized radiation components are present.

30. Microscopy method according to any one of Claims 21 to 29, wherein the differently oriented polarization components reach the direction of the sample via the phase plate (P).

31. Microscopy method according to any one of Claims 21 to 30, wherein an adjustable polarizer is arranged downstream of the phase plate (P).

**32.** Microscopy method according to any one of Claims 21 to 31, wherein part of the radiation is masked on a reference detector downstream of the phase plate (P) for the purposes of controlling the polarization distribution and/or the AOD or EOM.

**Revendications**

**1.** Microscope à balayage laser, comprenant

- au moins un laser (L) destiné à générer un rayon d'éclairage,
- un objectif de microscope destiné à concentrer le rayon d'éclairage dans un échantillon ainsi que
- un trajet de rayon de détection comprenant au moins un détecteur optoélectronique (d1, d2) et
- au moins un moyen de démodulation (m1, m2, A),

**caractérisé en ce que**
au moins un élément de modification temporelle périodique de la polarisation (EOM) est disposé dans le trajet de rayon d'éclairage, après lequel est montée une lame de phase (P), de telle sorte qu'une modulation de phase du rayon d'éclairage dans une zone partielle le long de sa section transversale avec une fréquence de modulation ($\omega$) temporelle présente dans au moins deux zones ayant une influence de phase différente, les moyens de démodulation (m1, m2, A) effectuant une démodulation par voie optique ou électronique de la fréquence de modulation ($\omega$).

**2.** Microscope selon la revendication 1, l'élément de modification temporelle périodique de la polarisation étant un élément de rotation de la polarisation.

**3.** Microscope selon la revendication 2, l'élément de rotation de la polarisation étant un modulateur électro-optique (EOM).

**4.** Microscope selon l'une des revendications précédentes, la lame de phase (P) possédant une zone ou des zones avec une phase sensiblement non influencée et une zone ou des zones avec une phase influencée.

**5.** Microscope selon la revendication 4, la zone ou les zones avec une phase influencée étant au moins une lame lambda/2.

**6.** Microscope selon l'une des revendications précédentes, le moyen de démodulation étant des moyens électroniques.

**7.** Microscope selon l'une des revendications précédentes, le moyen de démodulation un AOM ou un EOM.

**8.** Microscope selon l'une des revendications précédentes, une fibre optique étant disposée entre l'élément de modification temporelle périodique de la polarisation (EOM) et la lame de phase (P).

**9.** Microscope selon l'une des revendications précédentes, la lame de phase (P) étant elle-même réalisée rotative en vue de la modification de la polarisation.

**10.** Microscope selon l'une des revendications précédentes, la lame de phase (P) étant un modulateur de lumière dans l'espace.

**11.** Microscope selon l'une des revendications précédentes, la lame de phase (P) possédant différentes zones, notamment des zones ayant des retards de phase différents qui présentent entre elles un saut de phase égal à lambda/2.

**12.** Microscope selon l'une des revendications précédentes, un déflecteur acousto-optique étant présent, lequel dévie la lumière d'éclairage en alternance ou simultanément avec une amplitude modulée sur les entrées d'au moins deux fibres optiques.

**13.** Microscope selon l'une des revendications précédentes, des moyens d'injection destinés à l'injection dans au moins deux fibres optiques étant présents après l'élément de modification de la polarisation (EOM).

**14.** Microscope selon l'une des revendications précédentes, l'injection dans les fibres optiques s'effectuant en alternance ou une pondération dépendante du temps d'au moins deux composantes de lumière étant générée par une modulation d'amplitude.

15. Microscope selon l'une des revendications précédentes, une injection avec une orientation de la polarisation à chaque fois différente étant effectuée dans les fibres optiques.

16. Microscope selon l'une des revendications précédentes, les extrémités des fibres optiques ou leurs découplages au niveau d'un diviseur polaire étant orientés l'un par rapport à l'autre de telle sorte qu'il existe deux parts de rayonnement de polarités différentes.

17. Microscope selon l'une des revendications précédentes, les parts de polarisation à orientations différentes parvenant dans la direction de l'échantillon par le biais de la lame de phase (P).

18. Microscope selon l'une des revendications précédentes, un polarisateur réglable étant disposé après la lame de phase (P).

19. Microscope selon l'une des revendications précédentes, avec lequel, après la lame de phase (P), une partie du rayonnement sur un détecteur de référence est occultée en vue de commander la distribution de la polarisation et/ou l'AOM ou l'EOM.

20. Microscope selon l'une des revendications précédentes, les moyens de démodulation étant un système d'amplification à blocage.

21. Procédé de détection microscopique de la lumière d'un échantillon, lequel est éclairé avec au moins un rayon d'éclairage par le biais d'un objectif de microscope dans un microscope à balayage laser servant à la concentration, le rayon d'éclairage étant modulé en phase dans une zone partielle le long de sa section transversale avec une fréquence de modulation (ω) temporelle en ce qu'une modification de la polarisation est effectuée au moyen d'au moins un élément de modification temporelle périodique de la polarisation (EOM) et la modulation de phase est générée au moyen d'une lame de phase (P) disposée après l'élément de modification de la polarisation qui présente au moins deux zones ayant une influence de phase différente, une démodulation optique ou électronique avec la fréquence de modulation étant effectuée dans trajet de rayon de détection.

22. Procédé selon la revendication 21, l'élément de modification temporelle périodique de la polarisation utilisé étant un modulateur électro-optique (EOM).

23. Procédé selon l'une des revendications 21 ou 22, une régulation qui sert à l'optimisation du résultat de la mesure étant effectuée par le biais d'une mesure du signal d'échantillon lors d'un changement entre des lames de phase différentes.

24. Procédé de microscopie selon l'une des revendications 21 à 23, la lame de phase (P) possédant différentes zones, notamment des zones ayant des retards de phase différents qui présentent entre elles un saut de phase égal à lambda/2.

25. Procédé de microscopie selon l'une des revendications 21 à 24, un déflecteur acousto-optique étant présent, lequel dévie la lumière d'éclairage en alternance ou simultanément avec une amplitude modulée sur les entrées d'au moins deux fibres optiques.

26. Procédé de microscopie selon l'une des revendications 21 à 25, des moyens d'injection destinés à l'injection dans au moins deux fibres optiques étant présents après l'élément de modification de la polarisation (EOM).

27. Procédé de microscopie selon l'une des revendications 21 à 26, l'injection dans les fibres optiques s'effectuant en alternance ou une pondération dépendante du temps d'au moins deux composantes de lumière étant générée par une modulation d'amplitude.

28. Procédé de microscopie selon l'une des revendications 21 à 27, une injection avec une orientation de la polarisation à chaque fois différente étant effectuée dans les fibres optiques.

29. Procédé de microscopie selon l'une des revendications 21 à 28, les extrémités des fibres optiques ou leurs découplages au niveau d'un diviseur polaire étant orientés l'un par rapport à l'autre de telle sorte qu'il existe deux parts de rayonnement de polarités différentes.

30. Procédé de microscopie selon l'une des revendications 21 à 29, les parts de polarisation à orientations différentes parvenant dans la direction de l'échantillon par le biais de la lame de phase (P).

31. Procédé de microscopie selon l'une des revendications 21 à 30, un polarisateur réglable étant disposé après la lame de phase (P).

32. Procédé de microscopie selon l'une des revendications 21 à 31, avec lequel, après la lame de phase (P), une partie du rayonnement sur un détecteur de référence est occultée en vue de commander la distribution de la polarisation et/ou l'AOM ou l'EOM.

## FIG.1a

EOM

Phasenplatte P

L

M

PR

## FIG.1b

Schnelle
oder
langsame
Achse

P1

P2

λ/2    Glas

λ/2    Glas

P3

P4

λ/2    Glas

λ/2    Glas

# FIG.1c

Schnelle oder langsame Achse

EOM

Phasenplatte P

L

F

M

λ/2    Glas

λ/2    Glas

λ/2    Glas

λ/2    Glas

# FIG.2a

# **FIG.2b**

# FIG.2c

M1                              M2

SPP array

EOM

L1-4

PBS

M

M4                              M2

# FIG.3

AS

Schaltfrequenz f

PBS

DMG

S

L

0.

1.

QWP

AOM

M

# FIG.4a

# FIG.4b

# FIG.4c

## FIG.5a

## FIG.5a

EP 2 437 096 B1

Fig.6

Fig.7

Fig.8

Optional

Fkaus

Fkaus

PP

Zum Scanner

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009008838 A
- EP 500717 B2
- US 2002154317 A1
- DE 19904592

**In der Beschreibung aufgeführte Nicht-Patentliteratur**

- **CHEN et al.** *Opt. Express,* 2008, vol. 16, 18764
- **WONG et al.** *Appl. Opt.,* 2009, vol. 48, 3237
- **SUEDA et al.** *Opt. Express,* 2004, vol. 12, 3548
- **A. LERAY ; J. MERTZ.** *Opt. Express,* 2006, vol. 14, 10565
- *New J. Phys.,* 2004, vol. 6, 71